(19) Europäisches Patentamt
European Patent Office
Office européen des brevets

(11) **EP 2 941 372 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(51) Int Cl.:
*B60T 8/176* (2006.01)   *B60T 8/26* (2006.01)
*B60T 8/32* (2006.01)   *B60T 8/34* (2006.01)
*B60T 8/40* (2006.01)   *B60T 17/02* (2006.01)
*F16D 121/24* (2012.01)

(21) Anmeldenummer: **13792304.1**

(22) Anmeldetag: **11.11.2013**

(86) Internationale Anmeldenummer:
**PCT/EP2013/073493**

(87) Internationale Veröffentlichungsnummer:
**WO 2014/106548 (10.07.2014 Gazette 2014/28)**

(54) **BREMSSYSTEM SOWIE VERFAHREN ZUR DIMENSIONIERUNG EINES BREMSSYSTEMS**

BRAKE SYSTEM AND METHOD FOR DIMENSIONING A BRAKE SYSTEM

SYSTÈME DE FREINAGE AINSI QUE PROCÉDÉ PERMETTANT DE DIMENSIONNER UN SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.01.2013 DE 102013200045**

(43) Veröffentlichungstag der Anmeldung:
**11.11.2015 Patentblatt 2015/46**

(73) Patentinhaber: **Robert Bosch GmbH**
**70442 Stuttgart (DE)**

(72) Erfinder:
• DRUCKENMUELLER, Heiko
 74395 Mundelsheim (DE)
• STRENGERT, Stefan
 70469 Stuttgart (DE)
• KUNZ, Michael
 71711 Steinheim An Der Murr (DE)
• BENZLER, Steffen
 71735 Eberdingen (DE)

(56) Entgegenhaltungen:
WO-A1-2008/017726   DE-A1- 19 820 884
DE-A1-102009 046 273   US-A1- 2005 134 110
US-A1- 2008 140 293   US-A1- 2012 049 617

EP 2 941 372 B1

**Beschreibung**

Die vorliegende Erfindung betrifft Bremssystemtechnologie. Insbesondere betrifft die vorliegende Erfindung Bremssysteme mit erhöhter Druckaufbaudynamik. Weiter insbesondere betrifft die vorliegende Erfindung ein Verfahren zur Dimensionierung einer Komponente eines Bremssystems, ein Bremssystem für ein Fahrzeug sowie ein Fahrzeug, aufweisend ein erfindungsgemäßes Bremssystem.

Derartige System sind beispielsweise aus den Veröffentlichungen DE 10 2009 046 273 A1 oder WO 2008/017726 A1 bekannt.

Stand der Technik

Bremssysteme finden in Fahrzeugen Verwendung, um im regulären Fahrbetrieb gezielt und insbesondere maßvoll eine Entschleunigung eines Fahrzeuges vorzunehmen. In besonderen Extremsituationen, wie beispielsweise einer Vollbremsung, wird ein Bremssystem regelmäßig in seinem Grenzbereich betrieben, um eine bestmögliche bzw. schnellstmögliche Abbremsung des Fahrzeuges, zum Beispiel bis zum Stillstand, durchzuführen.

Ein solches Szenario, bei dem eine Vollbremsung nötig sein mag, ist der Fußgängerschutz. So kann es vorkommen, beispielsweise durch Unachtsamkeit des Fahrers eines Fahrzeuges oder auch des Fußgängers selbst, dass der Abstand zwischen einem Fahrzeug und dem Fußgänger derart gering ist, so dass eine Vollbremsung des Fahrzeuges durchgeführt werden muss, um die Unversehrtheit des Fußgängers sicherzustellen. Wenn im weiteren Verlauf von Fußgänger gesprochen wird, so ist hierunter jegliches Objekt im Fahrweg eines Fahrzeuges anzusehen, das bei einer Kollision mit dem Fahrzeug möglicherweise signifikant beschädigt wird. Dies mögen neben herkömmlichen Fußgängern beispielsweise Radfahrer, Tiere feststehende Objekte oder auch andere, insbesondere kleinere Fahrzeuge, sein.

Es ist absehbar, dass zukünftige Fahrzeugtechnologie verstärkt Anforderungen aus dem Bereich des Fußgängerschutzes erfüllen soll. Hierbei soll durch eine geeignete Erkennung und insbesondere einen teilautonomen oder autonomen Bremseingriff eine Kollision mit einem Objekt wie beispielsweise einem Fußgänger oder dergleichen verhindert werden. Eine Systemverbesserung stellt dabei meist einen einen kürzeren Bremsweg bereit. Der Bremsweg bestimmt sich nicht zuletzt nach einer möglichen Dynamik eines Bremssystems, somit, wie schnell ein geforderter Druck in einem Bremssystem aufgebaut werden kann, um beispielsweise Bremselemente an den Rädern zu betätigen.

Zwar werden auch Sensorik und geeignete Software zur sicheren Erkennung eines Fußgängers benötigt, jedoch wird eine mögliche Bremsleistung eines Fahrzeuges im Wesentlichen durch die Druckaufbaudynamik des Bremssystems bestimmt. Die Anforderungen an ein Bremssystem bezüglich des Fußgängerschutzes sind somit Druckdynamikanforderungen an dieses Bremssystem. Für einen verbesserten Fußgängerschutz ist ein Bremssystem mit einer höchstmöglichen Druckaufbaudynamik gefordert, um eine zeitliche Verzögerung zwischen Einleitung eines Bremseingriffs und letztendlicher Auslösung der Bremsen, somit die Vollverzögerung des Fahrzeugs, so gering wie möglich auszugestalten.

Offenbarung der Erfindung

Ein Aspekt der vorliegenden Erfindung mag darin gesehen werden, ein Bremssystem durch eine zielgerichtete Dimensionierung einer Komponente des Bremssystems, wie beispielsweise eines Pumpen-Elementes, die die Druckaufbaudynamik des Bremssystems wesentlich beeinflusst, zu verbessern.

Demgemäß wird ein Verfahren zur Dimensionierung einer Komponente eines Bremssystems, ein Bremssystem für ein Fahrzeug sowie ein Fahrzeug, aufweisend ein erfindungsgemäßes Bremssystem gemäß den unabhängigen Ansprüchen angezeigt. Bevorzugte Ausgestaltungen ergeben sich aus den abhängigen Ansprüchen.

Bremssysteme können unterschiedlich ausgeführt sein.

Einerseits mag ein Bremssystem rein mit einem hydraulischen Druck arbeiten, welcher von einem Fahrer auf das Bremspedal aufgebracht wird und durch geeignet verteilte und ausgestaltete Hydraulikleitungen im Fahrzeug bis zu den Bremselementen an den Rädern verbracht wird, wo durch diesen Druck Bremselemente gegeneinander verpresst werden und so aufgrund der erhöhten Reibung der Bremselemente untereinander eine Entschleunigung des Fahrzeuges erfolgt. Zusätzlich oder alternativ zu einem derartigen rein hydraulisch basierten Bremssystem mag das Bremssystem im Weiteren druckverstärkende Elemente aufweisen, wie beispielsweise ein Motorelement sowie Pumpen-Elemente. Im ABS-Fall kann ein solches Element, auch eine druckmindernde Funktion aufweisen, z.B. durch Rückförderung eines Hydraulikfluids aus dem Bremskreis.

Das Motorelement wird angesteuert von der Pedalbewegung des Bremspedals, ggf. unter Verwendung von Sensoren/Steuergerät und treibt wiederum die Pumpen-Elemente an um dabei eine über die reine Bremskraft durch den Fahrer hinaus eine zusätzliche Bremskraft bzw. einen weiteren Druckaufbau im Bremssystem bereitstellen. Hier beschrieben ist ein aktiver bzw. teilaktiver Druckaufbau, der durch viele weitere Ereignisse ausgelöst werden kann, z.B. zur Realisierung von autonomen Bremsen zum Fußgängerschutz aufgrund Video- bzw. /Radarinformation. So mag ein vergleichsweise geringer Pedaldruck oder gar keine Pedalbewegung einen hohen Hydraulikdruck im Bremssystem hervorrufen. Ein so derartig motorunterstütztes Bremssystem mag auch als Brake-by-Wire-System bezeichnet werden.

Bei einem Brake-by-Wire-System ist ein teilweises Brake-by-Wire-System sowie ein vollständiges Brake-by-Wire-System denkbar. Das teilweise Brake-by-Wire-System weist dabei Motorelement und Pumpen-Elemente auf, die einen Druck im Hydraulikleitungssystem neben dem über ein Bremspedal eingebrachten Bremsdruck des Fahrers einbringen, während ein vollständiges Brake-by-Wire-System im Wesentlichen ausschließlich Motorelemente ansteuert, die wiederum mit Pumpen-Elementen einen Hydraulikleitungsdruck aufbauen.

Ein besonders extremer Betriebsfall ist hierbei der sogenannte ABS-Betriebsfall. In diesem Fall wird ein derartig hoher Bremsdruck erzeugt, so dass die Räder aufgrund der Bremselemente im Wesentlichen vollständig blockieren, somit von einer Rollreibung in eine Gleitreibung übergehen. Ein weiterer Druckaufbau im System ergibt dabei keine weiter erhöhte Bremswirkung; vielmehr ist die gesamte Bremswirkung aufgrund der Gleitreibung der Reifen gegenüber einem Zustand mit maximal möglicher Bremskraft und Rollreibung sogar reduziert. Bei einem ABS-Betriebsfall wird nunmehr der Systemdruck des Hydrauliksystems intervallweise weiter reduziert, so dass die Räder aus ihrem ungünstigen Gleitreibungszustand in einen günstigen Rollreibungszustand zurückgehen.

Ein ABS-Betriebsfall stellt somit im Wesentlichen den höchstmöglichen Druck im Hydraulikleitungssystem dar. Werden nun ein Motorelement und Pumpen-Elemente ausgewählt, um einen Fahrer in einem Bremsfall zu unterstützen, so müssen diese derart dimensioniert werden, so dass sie auch noch in diesem schlimmsten anzunehmenden Bremsszenario (worst case) eine ausreichende Förderleistung für einen Druckaufbau bzw. für eine Rückförderung von Fluid entgegen dem im ABS-Fall höchstmöglichen Druck im Hauptbremszylinder bereitstellen. Im ABS-Fall wird das Pumpelement verwendet, um einen Druckabbau in den Radbremszangen zu realisieren. Der Systemdruck wird dadurch reduziert, dass das Pumpelement überzähliges Fluid aus dem Bremskreis in den Hauptbremszylinder, der vom Fahrer mit einem sehr hohen Druck beaufschlagt ist, zurückfördert, meist realisiert über Auslassventile für die Räder und eine Speicherkammer zur Zwischenspeicherung des Fluids.

Ein Betriebspunkt wird als ein Wertepaar von Motordrehzahl sowie dem dabei an dem Motorelement anliegenden Drehmoment abgebildet. Ein Arbeitspunkt bei einem ABS-Bremsfall stellt dabei ein vergleichsweise hohes Motormoment bei einer vergleichsweise kleinen Drehzahl dar. Dieser Betriebspunkt ist dabei der extremale Betriebspunkt des Bremssystems, für den das Motorelement ausgelegt sein muss. In anderen Worten muss bei einem solchen worst case Bremsszenario sichergestellt sein, dass dieser Betriebspunkt nicht überschritten wird, insbesondere kein höheres Motormoment auftritt, was in einer noch weiter verringerten Drehzahl resultieren würde, wodurch möglicherweise eine Förderleistung eines Pumpenelementes zu gering wäre, um einen gewünschten Bremsdruck aufzubauen.

Um nun ein Motorelement zu entlasten, mag ein Trennelement vorgesehen sein, das beispielsweise im Fall eines zweikreisigen Bremssystems mit einem Bremskreis-Teilkreis für eine erste und eine zweite Achse, z.B. eine Vorderachse und eine Hinterachse, einen Bremskreis-Teilkreis von der Druckbeaufschlagung durch zum Beispiel das Bremspedal eines teilweisen Brake-by-Wire-Systems, entkoppelt. Hierdurch wird in dem entkoppelten Bremskreis-Teilkreis meist ein geringerer Hydraulikleitungsdruck auftreten als im nicht entkoppelten Bremskreis-Teilkreis. Da regelmäßig ein Motorelement die getrennten Pumpenelemente der beiden Bremskreis-Teilkreise gemeinsam versorgt, wird aufgrund des reduzierten Druckes in einem Bremskreis-Teilkreis die summierte Anforderung an das Motorelement reduziert. Aufgrund des daraus resultierenden reduzierten Drehmomentes bzw. Motormomentes stellt sich eine höhere Drehzahl für das Motorelement ein. Der Betriebspunkt des Motorelementes verschiebt sich somit vom worst case Betriebspunkt bzw. dem extremalen Betriebspunkt, bei dem ausreichende Bremsleistung noch zur Verfügung steht, zu einem Betriebspunkt, der das Motorelement entlastet gegenüber dem extremalen ABS-Betriebspunkt. Unter extremal ist im Weiteren ein Zustand zu verstehen, in dem ein Element gerade noch eine geforderte Funktion erfüllen kann.

In anderen Worten bedeutet dies, dass das Motorelement jedoch nicht mehr an seiner Grenze betrieben wird, sondern dass an das Motorelement reduzierte Anforderungen gestellt werden. Diese reduzierten Anforderungen ermöglichen nunmehr, das Motorelement derart zu verändern, dass dieses Motorelement, auch im Betriebszustand mit den eigentlich reduzierten Anforderungen, wiederum an seinem extremalen Betriebspunkt betrieben wird, somit am Limit. Eine derartige Verschiebung des Betriebspunktes lässt sich bei der Dimensionierung eines speziellen Bremssystems dadurch berücksichtigen, dass beispielsweise ein Motorelement mit einer geringeren Förderleistung vorgesehen wird, was zum Beispiel zu einer Kostenreduktion für das Bremssystem führt. Gleichfalls mag ein derartiges verändertes Motorelement beispielsweise ein geringeres Gewicht aufweisen. Ein geringeres Gewicht bedeutet dabei für ein Fahrzeug regelmäßig auch einen geringeren Kraftstoffverbrauch.

Alternativ kann zumindest ein Pumpen-Element verändert werden, während das Motorelement im Wesentlichen beibehalten wird, so dass zwar der Betriebspunkt des Motorelementes wiederum auf den extremalen Betriebspunkt fällt, dabei jedoch eine Förderleistung eines Pumpen-Elementes im Hydrauliksystem ansteigt. Eine derartige Steigerung der Förderleistung wiederum beeinflusst die Druckaufbaudynamik eines Bremssystems positiv. In anderen Worten wird durch die gezielte Belastung eines Motorelementes eine zuvor erfolgte Entlastung, beispielsweise durch Auftrennen bzw. Abtrennen eines Bremskreis-Teilkreises, dazu verwendet, Pumpen-Elemente vorsehen zu können, welche dem Bremssystem dadurch eine höhere Dynamik verleihen, die sich wiederum positiv auf den Fußgängerschutz auswirkt.

Ausführungsformen der Erfindung sind in den Zeichnungen dargestellt und in der nachfolgenden Beschreibung näher erläutert.

Es zeigen:

**Fig. 1** eine schematische, exemplarische Ausgestaltung eines Bremssystems gemäß der vorliegenden Erfindung;

**Fig. 2a,b** exemplarische schematische Darstellungen von Betriebspunkten eines Motorelementes des Bremssystems der Figur 1; und

**Fig. 3** eine exemplarische Ausgestaltung des Verfahrens zur Dimensionierung einer Komponente eines Bremssystems gemäß der vorliegenden Erfindung.

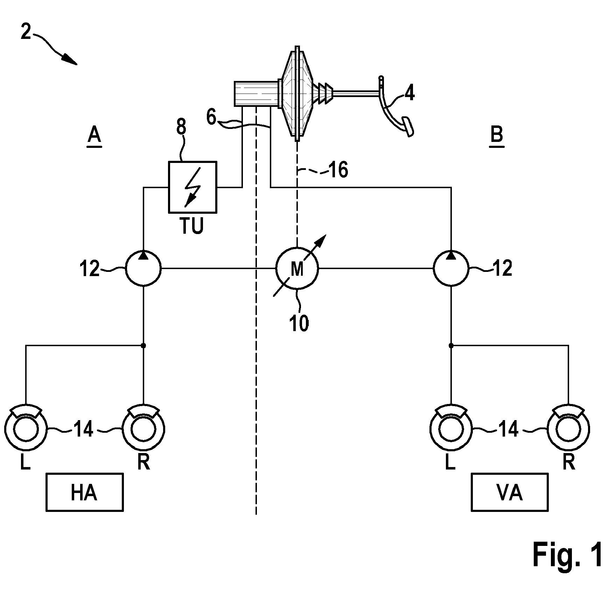

Weiter Bezug nehmend auf Figur 1 wird eine exemplarische Ausgestaltung eines Bremssystems gemäß der vorliegenden Erfindung dargestellt.

Figur 1 zeigt stark vereinfacht ein Bremssystem 2, das als teilweises Brake-by-Wire-System ausgeführt ist. Ein Fahrer kann einerseits unter Verwendung von Bremspedal 4 einen Bremsdruck in das Hydraulikleitungssystem 6 einbringen, welcher letztendlich unter Verwendung der geeignet angeordneten und geführten Hydraulikleitungen 6 im Fahrzeug bis zu den exemplarisch vier Rädern 14 führt.

An den Rädern 14 wirkt der Hydraulikdruck auf nicht näher dargestellte Bremskomponenten ein, wodurch eine Abbremsung der Räder 14 und damit eine Entschleunigung des Fahrzeuges eintritt. Exemplarisch ist das Bremssystem 2 der Figur 1 in zwei Bremskreis-Teilkreise A und B aufgeteilt, wobei der Bremskreis-Teilkreis A exemplarisch der Hinterachse entspricht, während der Bremskreis-Teilkreis B exemplarisch der Vorderachse eines zweiachsigen Fahrzeuges entspricht.

Zusätzlich sind Pumpenelemente 12 im Hydraulikleitungssystem 6 vorgesehen, die angesteuert von Motorelement 10 ebenfalls einen Druckaufbau im Hydraulikleitungssystem 6 bewirken können. Das Motorelement 10 ist unter Verwendung einer Kommunikationsverbindung 16 mit dem Bremspedal 4 verbunden und erhält hierüber Informationen bezüglich einer geforderten Motoraktion im Zusammenhang mit einem Bremsvorgang. Allgemein ist ein Motorelement über eine Kommunikationsverbindung mit einem Steuergerät verbunden, da Druckanforderungen auch ohne Bremspedalbetätigung gestellt werden können.

Bremskreis-Teilkreis A der Hinterachse weist exemplarisch ein Trennelement 8, beispielsweise ein Trennventil auf, das den weiteren Bremskreis-Teilkreis von der Hydraulikbeeinflussung durch das Bremspedal 4 des Fahrers entkoppelt. Ein vom Bremspedal in das Hydrauliksystem eingebrachter Hydraulikdruck wird nun im Wesentlichen in das Hydraulikleitungssystem 6 des Bremskreis-Teilkreises B der Vorderachse eingebracht, während das Hydraulikleitungssystem 6 des Bremskreis-Teilkreises A hinter dem Trennelement 8 keinem derartigen Druckaufbau ausgesetzt ist.

Pumpenelemente 12 müssen dabei, um ihrerseits einen weiteren Druckaufbau im Hydrauliksystem zu bewirken, auch auf einen vorherrschenden Hydraulikleitungsdruck reagieren. Neben einem Druckaufbau ist ein ABS-Fall ein worst-case-Szenario. Im ABS-Fall ist das Ziel des Pumpenlaufs die Rückförderung des Hydraulikfluids aus dem Bremskreis in einen Hauptbremszylinder, also gegen den hohen Fahrerdruck, somit die Entleerung der Speicherkammer. Dabei ist das Einbringen eines zusätzlichen Druckes bzw. die Förderung von Fluid in ein Hydraulikleitungsleitungssystem, in dem ein vergleichsweise hoher Druck bereits vorherrscht, schwieriger als in ein Hydraulikleitungssystem mit einem geringeren Hydraulikleitungdruck. Wird beispielsweise vom Fahrer unter Verwendung von Bremspedal 4 ein Hydraulikleitungsdruck von 200 bar aufgebaut, so muss das jeweilige Pumpen-Element 12 gegen diesen Leitungsdruck arbeiten. Dies wiederum stellt erhöhte Anforderungen an das Motorelement 10. Wenn nun beispielsweise das Trennelement 8 den Leitungsdruck des Bremskreis-Teilkreises auf im Wesentlichen 100 bar beschränkt, wird zumindest das Pumpen-Element 12 in diesem Bremskreis-Teilkreis geringer beansprucht als in dem Bremskreis-Teilkreis, in dem die Abtrennung nicht erfolgt und in dem somit die exemplarischen 200 bar vorherrschen. Wenn nun ein Pumpen-Element 12 in einem Bremskreis-Teilkreis mit 100 bar arbeiten soll, während ein weiteres in einem Bremskreis-Teilkreis mit 200 bar arbeiten soll, stellt dies reduzierte Anforderungen an das Motorelement 8 im Vergleich zu einem Einsatzszenario, in dem beide Pumpen-Elemente 12 in einem Bremskreis-Teilkreis mit einem Hydraulikdruck von 200 bar arbeiten sollen.

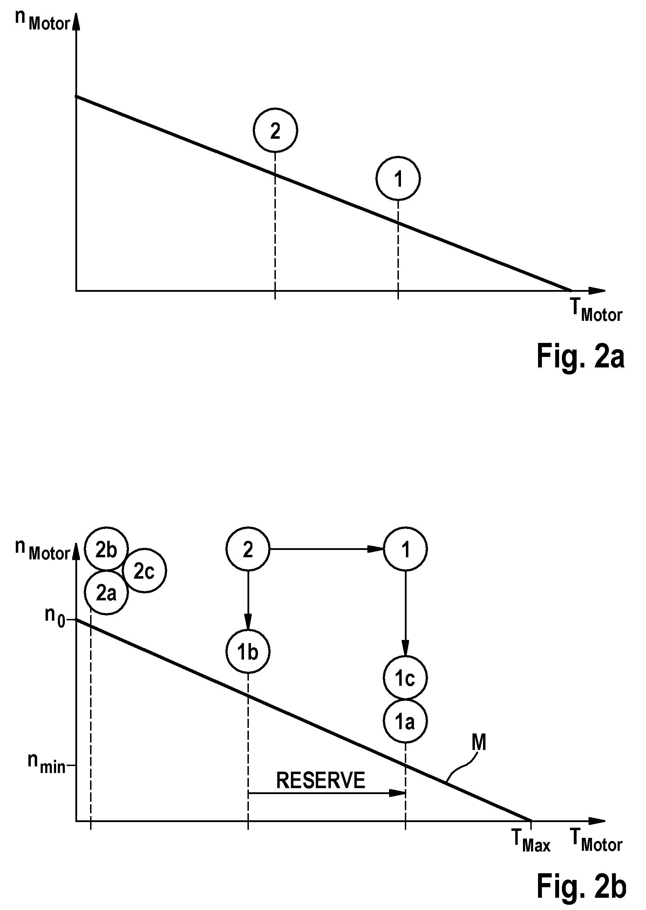

Weiter Bezug nehmend auf Figuren 2a,b werden exemplarische schematische Darstellungen von Betriebspunkten eines Motorelementes des Bremssystems der Figur 1 dargestellt.

Die Figuren 2a,b zeigen dabei die Motorkennlinie eines exemplarischen Motorelementes 10, insbesondere eines ESP- bzw. ESPhev (Hybrid Electric Vehicle)-Systems. Ein Betriebspunkt stellt dabei ein Wertepaar aus einer Drehzahl $n_{Motor}$ sowie einem Motormoment $T_{Motor}$ dar. Wird die Anforderung an das Motorelement reduziert, resultiert dadurch ein geringeres Motormoment, was zu einer erhöhten Drehzahl führt und umgekehrt. Im Falle der erhöhten Anforderungen an das Motorelement, eines erhöhten geforderten Motormoments, arbeitet das Motorelement mit einer verringerten Drehzahl.

Somit ist in der Motorkennlinie der Figur 2a über dem Motorment $T_{Motor}$ die erzielbare Drehzahl $n_{Motor}$ dargestellt. Diese Drehzahlkennlinie fällt über dem Motormoment ab, was letztendlich verdeutlicht, dass bei erhöhtem Motormoment nur noch verringerte Drehzahlen realisierbar sind.

In Verbindung mit einem Pumpen-Element 12, beispielsweise einer Kolbenpumpe, ergibt sich dabei das nachfolgende Verhalten. Der hydraulische Druck, gegen den das Pumpen-Element 12 arbeiten muss, bewirkt über entsprechende Wirkflächen und Hebel ein Moment, das vom Motor aufgebracht werden muss. Die Drehzahl des Pumpenmotors hingegen führt über die entsprechende Pumpengeometrie zu einem hydraulischen Volumenstrom, den die Pumpe zur Verfügung stellen kann. Dadurch ergibt sich eine Pumpenkennlinie, die bei geringen Gegendrücken im Hydraulikleitungssystem eine hohe Förderleistung ermöglicht, während bei höheren Drücken im Hydraulikleitungssystem nur noch eine geringere Förderleistung zur Verfügung steht.

Beispielsweise bei einer Kolbenpumpe sind die Wirkflächen, Hebel und Pumpengeometrien im Wesentlichen durch die Anzahl der Kolben, einem Kolbendurchmesser sowie die Exzentrizität bestimmt. Eine Erhöhung der Kolbenanzahl, eine Vergrößerung des Kolbendurchmessers sowie eine Erhöhung der Exzentrizität führen dabei zu einer Erhöhung des pro Umdrehung verschobenen Volumens, somit zu einer höheren Förderleistung eines Pumpen-Elementes pro Umdrehung, dabei gleichzeitig aber auch zu einem höheren Gegenmoment für ein Motorelement und damit zu einer geringeren Drehzahl des Motorelementes.

Ein wesentlicher Auslegungspunkt für ein Motorelement, insbesondere für ein ESP System, ist dabei die notwendige Förderleistung bei hohen Fahrerdrücken, somit hohen über das Bremspedal 4 eingebrachten Drücken in das Hydraulikleitungssystem, in einem Extremfall wie beispielsweise dem ABS-Fall. Betriebspunkt 1 in Figur 2a stellt dabei einen Betriebszustand des Bremssystems der Figur 1 dar, in dem im ABS-Fall das Trennelement 8 nicht trennt, somit in beiden Bremskreis-Teilkreisen A,B der gleiche, insbesondere der durch den Fahrer applizierte Druck herrscht. So müssen in diesem Einsatzbeispiel die Pumpen-Elemente bei zum Beispiel 200 bar Fahrerdruck im Hydraulikleitungssystem 6 noch einen spezifizierten Förderstrom erreichen, um beispielsweise ABS-spezifische Maßnahmen durchführen zu können, wie z.B. die ABS-Rückförderung bzw. Speicherkammerentleerung eines Bremssystems zu gewährleisten.

Dieser Fahrerdruck liegt somit an beiden Bremskreis-Teilkreisen an, ein Pumpen-Element muss somit den spezifizierten Volumenstrom gegen diesen doppelten Fahrerdruck in beiden Bremskreis-Teilkreisen zur Verfügung stellen. Das Motormoment des Motorelementes ist in diesem Betriebspunkt durch den doppelten Fahrerdruck bestimmt. Zur Erreichung der spezifizierten Förderleistung muss nun der Motor bei diesem sehr hohen Moment noch eine entsprechende Drehzahl bereitstellen. Die Pumpengeometrie und Motorleistung müssen deshalb derart abgestimmt sein, dass geforderte Spezifikationen noch eingehalten werden können. Betriebspunkt 1 stellt hierbei einen extremalen Betriebspunkt dar, insbesondere einen Betriebspunkt für die minimal erlaubte Motorelementdrehzahl bzw. das maximal erlaubte Motormoment.

Eine Förderleistung für hochdynamische Funktionen ist jedoch typischerweise bei geringen Drücken definiert. Dadurch ergibt sich eine erzielbare Druckdynamik aus der Leerlaufdrehzahl eines Motorelementes ohne bzw. nur mit geringen Momenten und einer entsprechenden Pumpengeometrie. Betriebspunkt 2 zeigt nun dasselbe Bremssystem der Figur 1, jedoch in einem Betriebsfall, in dem das Trennelement 8 den Bremskreis-Teilkreis A abtrennt, somit ein Fahrerdruck ausschließlich in den Bremskreis-Teilkreis B eingebracht wird. An der Vorderachse wirkt nun auch hier der vom Fahrer aufgeprägte Druck auf das Pumpen-Element 12, analog zum Betriebspunkt 1. In diesem Fall, ebenfalls ein ABS-Fall, wird aber das Trennelement 8, das Trennventil an der Hinterachse, geschlossen. Hierdurch wirkt an der Hinterachse bzw. in dem zugehörigen Hydraulikleitungssystem nicht der vom Fahrer aufgebrachte Druck, sondern vielmehr der Raddruck der Hinterachsräder.

Im ABS-Fall ist der Raddruck immer geringer als der vom Fahrer aufgebrachte Druck. Dadurch resultiert ein in Summe geringeres Druckniveau, gegen das die beiden Pumpen-Elemente 12 in Summe arbeiten müssen, zum Beispiel ein Vorderachsdruck von 200 bar sowie ein Hinterachsdruck von 100 bar. Das Pumpen-Element 12 im Bremskreis-Teilkreis A muss somit gegen einen geringeren Gegendruck arbeiten, was wiederum das gemeinsam aufzubringende Motormoment für das Motorelement 10 reduziert. Die Momentenlast des Motors wird dadurch reduziert, wodurch sich Betriebspunkt 2 einstellt. Wie in Figur 2a zu erkennen ist, ist der Betriebspunkt 2 jedoch ungleich des Betriebspunktes 1; somit arbeitet das Motorelement 10 nicht in seinem extremalen Betriebspunkt. In anderen Worten wäre jeder Betriebspunkt zwischen dem Betriebspunkt 2 und dem Betriebspunkt 1 in dem Fall, in dem das Trennelement 8 einen Bremskreis-Teilkreis auftrennt, ein noch erlaubter Betriebspunkt für das Motorelement 10, um noch eine spezifizierte bzw. geforderte Förderleistung bereitstellen zu können. Diese Reserve bzw. Unterforderung des Motorelementes 10 kann nun beispielsweise dafür verwendet werden, in zumindest einem Bremskreis-Teilkreis, beispielsweise an der Vorderachse, Pumpen-Elemente mit veränderten Pumpengeometrien einzusetzen, welche zwar ein höheres Gegenmoment aufweisen, somit letztendlich bei gleichem Gegendruck ein höheres Motormoment auf das Motorelement 10 beaufschlagen und dadurch den Betriebspunkt von Betriebspunkt 2 in Richtung Betriebspunkt 1 verschieben, dafür aber pro Umdrehung ein deutlich größeres Volumen verschieben. Eine ABS-Spezifikation kann trotzdem eingehalten werden, da das höhere Vorderachsmoment durch das geringere Hinterachsmoment kompensiert wird. Bestenfalls können die Pumpen-Elemente derart verändert werden, so dass sich z.B. im ABS-Fall wiederum der Betriebspunkt 1 einstellt, nun aber mit einem signifikant erhöhten Fördervolumen in allen Betriebspunkten. Dieses erhöhte Fördervolumen erhöht dabei gleichzeitig die Druckdynamik des Bremssystems.

Da sich an der Vorderachse exemplarisch eine größere Volumenverschiebung im Falle des entsprechend veränderten Pumpen-Elementes pro Umdrehung ergibt, können hier deutlich höhere Förderleistungen erzielt werden. Exemplarisch kann bei gleicher Motorleistung an der Vorderachse anstelle eines Pumpen-Elementes mit einem Durchmesser von 6,5 mm ein solches mit einem Durchmesser von 8 mm eingesetzt werden. Eine Förderleistung mag sich damit um ca. 50 Prozent erhöhen lassen, was die Druckdynamik eines Bremssystems derart erhöhen mag, so dass sich für einen Fußgängerschutz zum Beispiel eine Bremswegverkürzung aus 40 km/h von ca. 1,5 m bis 2,5 m ergibt.

Allgemein ergibt sich das erfinderische Konzept insbesondere dadurch, dass in einem ABS-Fall zumindest ein Bremskreis-Teilkreis von einem Fahrerdruck entkoppelt wird bzw. generell der Hydraulikleitungsdruck auf einem niedrigeren Niveau gehalten wird, wodurch sich eine Entlastung eines Motorelementes ergibt.

Weiter Bezug nehmend auf Figur 2b werden drei unterschiedlich ausgestaltete Bremssysteme verglichen.

System a geht dabei aus von einem herkömmlichen Bremssystem gemäß Figur 1, bei dem im ABS-Bremsfall das Trennelement 8 nicht trennt bzw. möglicherweise gar nicht einmal vorgesehen ist. System b wiederum stellt das System der Figur 1 dar, welches das Trennelement 8 öffnet und somit den Bremskreis-Teilkreis A vom Fahrerdruck abtrennt, während die Pumpen-Elemente 12 sowie das Motorelement 10 unverändert belassen werden. System c wiederum entspricht dem System b, wobei die Pumpen-Elemente 12 und/oder das Motorelement 10 derart verändert wurden, so dass der Betriebspunkt von Betriebspunkt 1b zu Betriebspunkt 1a verschoben wird und damit Betriebspunkt 1b entspricht. Dies entspricht der zuvor unter Verwendung von Figur 2a beschriebenen Verschiebung des Betriebspunkte 2 auf den Betriebspunkt 1 durch Umdimensionierung entweder der Pumpen-Elemente 12 und/oder des Motorelementes 10.

Betriebspunkt 1a stellt nun den worst case Betriebspunkt, somit den ABS-Fall für das System a dar, gekennzeichnet durch ein hohes Gegenmoment des Pumpenmotors. Betriebspunkt 1b stellt den worst case Betriebspunkt, somit den ABS-Fall für System b dar, gekennzeichnet durch eine mittlere Drehzahl und ein mittleres Gegenmoment des Pumpenmotors. Dies wurde durch Abtrennung eines Bremskreis-Teilkreises vom Fahrerdruck erreicht, die restlichen Parameter sin dim Wesentlichen unverändert. Betriebspunkt 1c wiederum stellt den worst case Betriebspunkt im ABS-Fall für das System c dar, gekennzeichnet durch ein hohes Gegenmoment des Pumpenmotors. Dabei wurde der Betriebspunkt 1b zum Betriebspunkt 1c durch entsprechende Umdimensionierung oder andere Auswahl der Pumpen-Elemente 12 bzw. des Motorelementes 10. Die Betriebspunkte 2a,b,c, welche im Wesentlichen identisch sind, entsprechen den Betriebspunkten für autonomes Bremsen aller Systeme, gekennzeichnet durch sehr hohe Drehzahl und geringes Gegenmoment des Pumpenmotors. In jedem Betriebspunkt 1 muss aus Sicherheitsgründen eine ausreichende Förderleistung der Pumpe garantiert werden. Da jedoch nur Betriebspunkte 1a und 1c extremale Betriebspunkte des Motorelementes 10 darstellen, die in keinem Fall unterschritten werden dürfen (Moment überschritten bzw. Drehzahl unterschritten), weist der Betriebspunkt 1b eine gewisse Reserve auf, die, wie zuvor beschrieben, die Verwendung anders dimensionierter Pumpen-Elemente ermöglicht. Die in den Figuren 2a,b dargestellten Betriebspunkte ergeben sich am Beispiel einer Kolbenpumpe durch das Gegenmoment M des Motors gemäß Gleichung 1.

$$M = M_{fric} + \frac{\pi}{4} * e * (p_1 * d_1^2 + p_2 * d_2^2)$$

**Gleichung 1**

mit dem Reibmoment $M_{FRIC}$, der Exzentrizität e der Pumpe, den Drücken $p_1$, $p_2$ im ersten und zweiten Bremskreis-Teilkreis A,B sowie den Durchmessern $d_1$ und $d_2$ der Pumpen-Elemente 12 in dem ersten und zweiten Bremskreis-Teilkreis. Wirkflächen der Pumpenelemente ergeben sich aus $\Box/4*d^2$. Die Kraft ergibt sich als Wirkfläche * Druck p. Die dazugehörigen Motordrehzahlen ergeben sich durch die Motorkennlinie der Figur 2a,b.

Die Betriebspunkte 1/1a/1c stellen dabei allgemein einen ersten Betriebspunkt, Betriebspunkt 2/1b allgemein einen zweiten Betriebspunkt sowie die Betriebspunkte 2a/2b/2c allgemein einen dritten Betriebspunkt dar.

Über die Anzahl und die Flächen der Pumpen-Elemente, die Exzentrizität sowie die Drehzahl des Motors kann der Fördervolumenstrom für jeden Bremskreis abgeschätzt und eingestellt werden. Ein Aspekt ist nunmehr die Verbesserung bzw. Erhöhung des Fördervolumenstroms für die dritten Betriebspunkt 2a/2b/2c.

Durch die vergrößerten Wirkflächen der Pumpen-Elemente in einem Bremskreis-Teilkreis, beispielsweise dem Vorderachskreis des Systems c, lassen sich signifikante Verbesserungen der Förderleistung im dritten Betriebspunkt 2a/2b/2c erzielen. Mit anderen Worten wird durch die Verschiebung des Betriebspunktes 1b auf den Betriebspunkt 1c aufgrund einer geänderten Dimensionierung der Pumpenelemente nicht nur der Volumenstrom in dem jeweiligen Bremskreis-Teilkreis in den worst case Betriebspunkten 1, sondern nachfolgend genauso für die normalen Betriebspunkte 2 geändert bzw. erhöht. Trotzdem sind die Volumenströme im Betriebspunkt 1 nicht geringer als beim System a, somit nicht geringer als extremal erlaubt bzw. gefordert.

Typische Wertebereiche für Pumpenmoment, Drehzahl sowie den Volumenströmen an Vorderachse und Hinterachse eines exemplarischen Bremssystems in den Betriebspunkten 1 und 2 sind in Tabelle 1 zu finden.

**Tabelle 1**

|  | System a: | System b: | System c: |
|---|---|---|---|
| Pumpenmoment $M_{ABS}$ in Ncm | 100 - 140 | 60 - 90 | 100 - 140 |
| Motordrehzahl n in U/min | 2000-2500 | 3500-3800 | 2000-2500 |
| **Volumenströme:** |  |  |  |
| VA Betriebspunkt 2 in $cm^3$/s | 10,0-12,0 | 10,0-12,0 | 18,0-20,0 |
| HA Betriebspunkt 2 in $cm^3$/s | 10,0-12,0 | 10,0-12,0 | 12,0-14,0 |
| VA Betriebspunkt 1 in $cm^3$/s | 4,0-6,0 | 7,0-9,0 | 8,0-10,0 |
| HA Betriebspunkt 1 in $cm^3$/s | 4,0-6,0 | 7,0-9,0 | 4,0-6,0 |

Tabelle 2 zeigt exemplarische beispielwerte für Volumenströme mit den zugehörigen Pumpenvarianten für das System a, das teilweise Brake-by-Wire-System b sowie das Brake-by-Wire-System c mit verbesserter Druckdynamik. In diesem Beispiel hat ein Motorelement eine maximale Drehzahl von $n_{max}$ = 4500 U/min und ein maximales Drehmoment Mmax = 220 Ncm bei einem exemplarischen Reibmoment Mfric = 30 Ncm.

**Tabelle 2**

|  | System a: | System b: | System c: |
|---|---|---|---|
| **Pumpengeometrie:** |  |  |  |
| $d_{VA}$ in mm | 6 | 6 | 7,5 |
| $d_{HA}$ in mm | 6 | 6 | 6 |
| e in mm | 0,9 | 0,9 | 1 |
| Wirkfläche VA in $mm^2$ | 28,27 | 28,27 | 44,18 |
| Wirkfläche HA in $mm^2$ | 28,27 | 28,27 | 28,27 |
| Hebelarm in mm | 0,9 | 0,9 | 1 |
|  |  |  |  |
| **Betriebspunkt 1:** |  |  |  |
| $p_{VA}$ in bar (Betriebspunkt 1) | 250 | 250 | 250 |
| $p_{HA}$ in bar (Betriebspunkt 1) | 250 | 60 | 60 |
| Pumpenmoment $M_{ABS}$ in Ncm | 130 | 80 | 130 |
| Motordrehzahl n in U/min | 1900 | 2800 | 1900 |
|  |  |  |  |
| **Volumenströme** |  |  |  |
| VA Betriebspunkt 1 in $cm^3$/s | 4,8 | 7,3 | 8,3 |
| HA Betriebspunkt 1 in $cm^3$/s | 4,8 | 7,3 | 5,4 |
| VA Betriebspunkt 2 in $cm^3$/s | 11,5 | 11,5 | 20,0 |
| HA Betriebspunkt 2 in $cm^3$/s | 11,5 | 11,5 | 13,0 |

Wie aus den Werten der Tabelle 2 zu entnehmen ist, kann bei kaum verändertem Wertepaar von Motormoment/Drehzahl, somit bei im Wesentlichen gleichbleibendem Betriebspunkt des Systems a und c, durch eine veränderte Pumpengeometrie eine deutlich höhere Förderleistung im Betriebspunkt 2 erreicht werden.

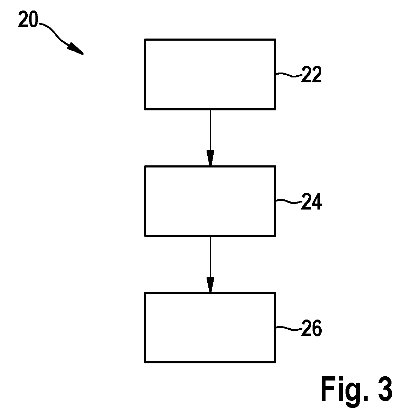

Weiter Bezug nehmend auf Figur 3 wird eine exemplarische Ausgestaltung des Verfahrens zur Dimensionierung einer Komponente eines Bremssystems gemäß der vorliegenden Erfindung dargestellt.

**EP 2 941 372 B1**

Figur 3 zeigt dabei ein Verfahren 20 zur Dimensionierung einer Komponente eines Bremssystems, wobei das Bremssystem 2 zumindest zwei Bremskreis-Teilkreise A,B aufweist, wobei jeder Bremskreis-Teilkreis A,B zumindest ein Pumpen-Element 12 zum Aufbau eines Bremskreis-Teilkreis-Druckes aufweist, wobei die Pumpen-Elemente 12 der zumindest zwei Bremskreis-Teilkreise A,B unter Verwendung eines Motorelementes 10 betreibbar sind und wobei die zumindest zwei Bremskreis-Teilkreise A,B unter Verwendung eines Trennelementes 8 trennbar sind, so dass unterschiedliche Bremskreis-Teilkreis-Drücke in den zumindest zwei Bremskreis-Teilkreisen A,B darstellbar sind, aufweisend die Schritte Bestimmen 22 eines ersten, definierten Arbeitspunktes eines ersten Betriebszustandes des Bremskreissystems 1, der Arbeitspunkt, bestehend aus einem ersten Drehmoment und einer ersten Drehzahl eines Motorelementes 10 in dem ersten Betriebszustand und Bestimmen 24 eines zweiten, definierten Arbeitspunktes eines zweiten Betriebszustandes des Bremskreissystems 2, der Arbeitspunkt, bestehend aus einem zweiten Drehmoment und einer zweiten Drehzahl eines Motorelementes 10 in dem zweiten Betriebszustand, gekennzeichnet durch Dimensionieren 26 der Pumpen-Elemente dergestalt, dass sich im zweiten Betriebszustand ein Arbeitspunkt des Motorelementes 10 einstellt, der vom zweiten Arbeitspunkt in Richtung des ersten Arbeitspunktes verschoben ist.

**Patentansprüche**

1. Verfahren (20) zur Dimensionierung einer Komponente eines Bremssystems;
   wobei das Bremssystem (2) zumindest zwei Bremskreis-Teilkreise () aufweist;
   wobei jeder Bremskreis-Teilkreis (A,B) zumindest ein Pumpen-Element (12) zum Aufbau eines Bremskreis-Druckes und/oder zur Rückförderung von Bremskreis-Fluid in einem ABS-Fall aufweist;
   wobei die Pumpen-Elemente (12) der zumindest zwei Bremskreis-Teilkreise (A,B) unter Verwendung eines Motorelementes (10) betreibbar sind; und wobei die zumindest zwei Bremskreis-Teilkreise (A,B) unter Verwendung eines Trennelementes (8) trennbar sind, so dass unterschiedliche Bremskreis-Drücke in den zumindest zwei Bremskreis-Teilkreisen (A,B) darstellbar sind;
   aufweisend die Schritte
   bestimmen (22) eines ersten, definierten Arbeitspunktes eines ersten Betriebszustandes des Bremskreissystems (2), der Arbeitspunkt bestehend aus einem ersten Drehmoment und einer ersten Drehzahl des Motorelementes (10) in dem ersten Betriebszustand; und
   bestimmen (24) eines zweiten, definierten Arbeitspunktes eines zweiten Betriebszustandes des Bremskreissystems (2), der Arbeitspunkt bestehend aus einem zweiten Drehmoment und einer zweiten Drehzahl des Motorelementes (10) in dem zweiten Betriebszustand;
   **gekennzeichnet durch**
   dimensionieren (26) der Pumpen-Elemente (12) dergestalt, dass sich im zweiten Betriebszustand ein Arbeitspunkt des Motorelementes () einstellt, der vom zweiten Arbeitspunkt in Richtung des ersten Arbeitspunktes verschoben ist, wodurch in einem dritten Betriebspunkt eine Erhöhung der Förderleistung zumindest eines der Pumpen-Elemente (12) resultiert.

2. Verfahren gemäß dem vorhergehenden Anspruch, wobei der Arbeitspunkt des Motorelementes (10) im zweiten Betriebszustand im Wesentlichen dem ersten Arbeitspunkt entspricht.

3. Verfahren gemäß einem der vorhergehenden Ansprüche, wobei der erste Arbeitspunkt ein im Wesentlichen extremal zulässiger Arbeitspunkt des Bremssystems (2) ist; und wobei der zweite Arbeitspunkt ein zulässiger Arbeitspunkt des Bremssystems (2) ist.

4. Verfahren gemäß einem der vorhergehenden Ansprüche, wobei im ersten Betriebszustand die zumindest zwei Bremskreis-Teilkreise (A,B) nicht getrennt sind und wobei im zweiten Betriebszustand die zumindest zwei Bremskreis-Teilkreise (A,B) unter Verwendung des Trennelementes (8) getrennt sind.

5. Verfahren gemäß einem der vorhergehenden Ansprüche, wobei der zweite Betriebszustand ein ABS-Betriebszustand des Bremssystems ist.

6. Bremssystem (2) für ein Fahrzeug, aufweisend
   zumindest zwei Bremskreis-Teilkreise (A,B);
   wobei jeder Bremskreis-Teilkreis (A,B) zumindest ein Pumpen-Element (12) zum Aufbau eines Bremskreis-Druckes aufweist;
   wobei die Pumpen-Elemente (12) der zumindest zwei Bremskreis-Teilkreise (A,B) unter Verwendung eines Motorelementes (10) betreibbar sind; wobei die zumindest zwei Bremskreis-Teilkreise (A,B) unter Verwendung eines Trennelementes (8) trennbar sind, so dass unterschiedliche Bremskreis-Drücke in den zumindest zwei Bremskreis-Teilkreisen (A,B) darstellbar sind;

wobei ein erster, definierter Arbeitspunkt eines ersten Betriebszustandes des Bremskreissystems (2) bestimmbar ist, der Arbeitspunkt bestehend aus einem ersten Drehmoment und einer ersten Drehzahl des Motorelementes (10) in dem ersten Betriebszustand; und

wobei ein zweiter, definierter Arbeitspunkt eines zweiten Betriebszustandes des Bremskreissystems (2) bestimmbar ist, der Arbeitspunkt bestehend aus einem zweiten Drehmoment und einer zweiten Drehzahl des Motorelementes (10) in dem zweiten Betriebszustand;

**dadurch gekennzeichnet, dass**

die Pumpen-Elemente (12) dergestalt dimensioniert sind, so dass sich im zweiten Betriebszustand ein Arbeitspunkt des Motorelementes (10) einstellt, der vom zweiten Arbeitspunkt in Richtung des ersten Arbeitspunktes verschoben ist, wodurch in einem dritten Betriebspunkt eine Erhöhung der Förderleistung zumindest eines der Pumpen-Elemente (12) resultiert.

7. Bremssystem gemäß Anspruch 6, wobei der Arbeitspunkt des Motorelementes (10) im zweiten Betriebszustand im Wesentlichen dem ersten Arbeitspunkt entspricht.

8. Bremssystem gemäß einem der Ansprüche 6 oder 7, wobei der erste Arbeitspunkt ein im Wesentlichen extremal zulässiger Arbeitspunkt des Bremssystems (2) ist; und wobei der zweite Arbeitspunkt ein zulässiger Arbeitspunkt des Bremssystems (2) ist.

9. Bremssystem gemäß einem der Ansprüche 6 bis 8, wobei im ersten Betriebszustand die zumindest zwei Bremskreis-Teilkreise (A,B) nicht getrennt sind und wobei im zweiten Betriebszustand die zumindest zwei Bremskreis-Teilkreise (A,B) unter Verwendung des Trennelementes getrennt sind.

10. Bremssystem gemäß einem der Ansprüche 6 bis 9, wobei der zweite Betriebszustand ein ABS-Betriebszustand des Bremssystems (2) ist.

11. Bremssystem gemäß einem der Ansprüche 6 bis 10, wobei das Bremsystem (2) zwei Bremskreis-Teilkreise (A,B) aufweist, wobei der erste Bremskreis-Teilkreis (B) einer Vorderachse eines Fahrzeuges zugeordnet ist und wobei der zweite Bremskreis-Teilkreis (A) einer Hinterachse eines Fahrzeuges zugeordnet ist.

12. Bremssystem gemäß einem der Ansprüche 6 bis 11, wobei der Arbeitspunkt des Motorelementes (10) bestimmbar ist als das Gegenmoment M des Motorelementes unter Verwendung der Formel

$$M = M_{fric} + \frac{\pi}{4} * e * (p_1 * d_1^2 + p_2 * d_2^2)$$

und wobei zwei Pumpenelemente ausgebildet sind als Pumpenelemente mit Durchmesser d1>d2, insbesondere d1=7,5mm und d2=6mm.

13. Fahrzeug, aufweisend ein Bremssystem (2) gemäß zumindest einem der Ansprüche 6 bis 12.

**Claims**

1. Method (20) for dimensioning a component of a brake system;

wherein the brake system (2) has at least two brake circuit partial-circuits ();

wherein each brake circuit partial-circuit (A, B) has at least one pump element (12) for building up a brake circuit pressure and/or for feeding back brake circuit fluid in an ABS situation;

wherein the pump elements (12) of the at least two brake circuit partial-circuits (A, B) can be operated using a motor element (10); and

wherein the at least two brake circuit partial-circuits (A, B) can be disconnected using a disconnecting element (8), with the result that different brake circuit pressures can be formed in the at least two brake circuit partial-circuits (A,'B);

having the steps

determining (22) a first defined working point of a first operating state of the brake circuit system (2), the working point being composed of a first torque and of a first rotational speed of the motor element (10) in the first operating state; and
determining (24) a second defined working point of a second operating state of the brake circuit system (2), the working point being composed of a second torque and of a second rotational speed of the motor element (10) in the second operating state;
**characterized by**
dimensioning (26) the pump elements (12) in such a way that in the second operating state a working point of the motor element () is set which is shifted from the second working point in the direction of the first working point, as a result of which there is a resulting increase in the delivery capacity of at least one of the pump elements (12) at a third operating point.

2. Method according to the preceding claim, wherein the working point of the motor element (10) in the second operating state corresponds essentially to the first working point.

3. Method according to one of the preceding claims, wherein the first working point is a working point of the brake system (2) which is permissible essentially in extremes, and wherein the second working point is a permissible working point of the brake system (2).

4. Method according to one of the preceding claims, wherein in the first operating state the at least two brake circuit partial-circuits (A, B) are not disconnected from one another and wherein in the second operating state the at least two brake circuit partial-circuits (A, B) are disconnected using the disconnecting element (8).

5. Method according to one of the preceding claims, wherein the second operating state is an ABS operating state of the brake system.

6. Brake system (2) for a vehicle, having at least two brake circuit partial-circuits (A, B); wherein each brake circuit partial-circuit (A, B) has at least one pump element (12) for building up a brake circuit pressure;
wherein the pump elements (12) of the at least two brake circuit partial-circuits (A, B) can be operated using a motor element (10);
wherein the at least two brake circuit partial-circuits (A, B) can be disconnected using a disconnecting element (8), with the result that different brake circuit pressures can be formed in the at least two brake circuit partial-circuits (A, B);
wherein a first defined working point of a first operating state of the brake circuit system (2) can be determined, the working point being composed of a first torque and of a first rotational speed of the motor element (10) in the first operating state; and
wherein a second defined working point of a second operating state of the brake circuit system (2) can be determined, the working point being composed of a second torque and of a second rotational speed of the motor element (10) in the second operating state, **characterized in that**
the pump elements (12) are dimensioned in such a way that in the second operating state a working point of the motor element (10) is set which is shifted from the second working point in the direction of the first working point, as a result of which there is a resulting increase in the delivery capacity of at least one of the pump elements (12) at a third operating point.

7. Brake system according to Claim 6, wherein the working point of the motor element (10) in the second operating state corresponds essentially to the first working point.

8. Brake system according to one of Claims 6 and 7, wherein the first working point is a working point of the brake system (2) which is permissible essentially in extremes, and wherein the second working point is a permissible working point of the brake system (2).

9. Brake system according to one of: Claims 6 to 8, wherein in the first operating state the at least two brake circuit partial-circuits (A, B) are not disconnected and wherein in the second operating state the at least two brake circuit partial-circuits (A, B) are disconnected using the disconnecting element.

10. Brake system according to one of Claims 6 to 9, wherein the second operating state is an ABS operating state of the brake system (2).

11. Brake system according to one of Claims 6 to 10, wherein the brake system (2) has two brake circuit partial-circuits (A, B), wherein the first brake
circuit partial-circuit (B) is assigned to a front axle of a vehicle, and wherein the second brake circuit partial-circuit (A) is assigned to a rear axle of a vehicle.

**12.** Brake system according to one of Claims 6 to 11, wherein the working point of the motor element (10) can be determined as the opposing torque M of the motor element using the formula

$$M = M_{fric} + \frac{\pi}{4} * e * (p_1 * d_1^2 + p_2 * d_2^2)$$

and wherein two pump elements are formed as pump elements with a diameter d1>d2, in particular d1=7.5 mm and d2=6 mm.

**13.** Vehicle having a brake system (2) according to at least one of Claims 6 to 12.

### Revendications

**1.** Procédé (20) permettant de dimensionner un composant d'un système de freinage; dans lequel le système de freinage (2) comprend au moins deux circuits partiels de circuit de freinage (); dans lequel chaque circuit partiel de circuit de freinage (A, B) présente au moins un élément de pompe (12) pour créer une pression de circuit de freinage et/ou pour renvoyer du fluide de circuit de freinage dans le cas d'un ABS; dans lequel les éléments de pompe (12) desdits au moins deux circuits partiels de circuit de freinage (A, B) peuvent être activés en utilisant un élément moteur (10); et dans lequel lesdits au moins deux circuits partiels de circuit de freinage (A, B) peuvent être séparés en utilisant un élément de séparation (8), de telle manière que des pressions de circuit de freinage différentes puissent être présentes dans lesdits au moins deux circuits partiels de circuit de freinage (A, B) ; présentant les étapes suivantes:

déterminer (22) un premier point de travail défini d'un premier état de fonctionnement du système de circuit de freinage (2), le point de travail se composant d'un premier couple de rotation et d'une première vitesse de rotation de l'élément moteur (10) dans le premier état de fonctionnement; et déterminer (24) un deuxième point de travail défini d'un deuxième état de fonctionnement du système de circuit de freinage (2), le point de travail se composant d'un deuxième couple de rotation et d'une deuxième vitesse de rotation de l'élément moteur (10) dans le deuxième état de fonctionnement; **caractérisé par** l'étape suivante:

dimensionner (26) les éléments de pompe (12) de telle manière qu'il s'établisse dans le deuxième état de fonctionnement un point de travail de l'élément moteur () qui est déplacé du deuxième point de travail en direction du premier point de travail, conduisant ainsi dans un troisième point de fonctionnement à un accroissement de la puissance de transport d'au moins un des éléments de pompe (12).

**2.** Procédé selon la revendication précédente, dans lequel le point de travail de l'élément moteur (10) dans le deuxième état de fonctionnement correspond essentiellement au premier point de travail.

**3.** Procédé selon l'une quelconque des revendications précédentes, dans lequel le premier point de travail est un point de travail admissible essentiellement extrême du système de freinage (2); et dans lequel le deuxième point de travail est un point de travail admissible du système de freinage (2).

**4.** Procédé selon l'une quelconque des revendications précédentes, dans lequel dans le premier état de fonctionnement lesdits au moins deux circuits partiels de circuit de freinage (A, B) ne sont pas séparés et dans lequel dans le deuxième état de fonctionnement lesdits au moins deux circuits partiels de circuit de freinage (A, B) sont séparés en utilisant l'élément de séparation (8).

**5.** Procédé selon l'une quelconque des revendications précédentes, dans lequel le deuxième état de fonctionnement est un état de fonctionnement ABS du système de freinage.

**6.** Système de freinage (2) pour un véhicule, présentant au moins deux circuits partiels de circuit de freinage (A, B);

dans lequel chaque circuit partiel de circuit de freinage (A, B) présente au moins un élément de pompe (12) pour créer une pression de circuit de freinage; dans lequel les éléments de pompe (12) desdits au moins deux circuits partiels de circuit de freinage (A, B) peuvent être activés en utilisant un élément moteur (10) ;

dans lequel lesdits au moins deux circuits partiels de circuit de freinage (A, B) peuvent être séparés en utilisant un élément de séparation (8), de telle manière que des pressions de circuit de freinage différentes puissent être présentes dans lesdits au moins deux circuits partiels de circuit de freinage (A, B);

dans lequel un premier point de travail défini d'un premier état de fonctionnement du système de circuit de freinage (2) peut être déterminé, le point de travail se composant d'un premier couple de rotation et d'une première vitesse de rotation de l'élément moteur (10) dans le premier état de fonctionnement; et

dans lequel un deuxième point de travail défini d'un deuxième état de fonctionnement du système de circuit de freinage (2) peut être déterminé, le point de travail se composant d'un deuxième couple de rotation et d'une deuxième vitesse de rotation de l'élément moteur (10) dans le deuxième état de fonctionnement; **caractérisé en ce que** on dimensionne les éléments de pompe (12) de telle manière qu'il s'établisse dans le deuxième état de fonctionnement un point de travail de l'élément moteur (10), qui est déplacé du deuxième point de travail en direction du premier point de travail, conduisant ainsi dans un troisième point de fonctionnement à un accroissement de la puissance de transport d'au moins un des éléments de pompe (12).

7. Système de freinage selon la revendication 6, dans lequel le point de travail de l'élément moteur (10) dans le deuxième état de fonctionnement correspond essentiellement au premier point de travail.

8. Système de freinage selon une des revendications 6 ou 7, dans lequel le premier point de travail est un point de travail admissible essentiellement extrême du système de freinage (2); et dans lequel le deuxième point de travail est un point de travail admissible du système de freinage (2).

9. Système de freinage selon l'une quelconque des revendications 6 à 8, dans lequel dans le premier état de fonctionnement lesdits au moins deux circuits partiels de circuit de freinage (A, B) ne sont pas séparés et dans lequel dans le deuxième état de fonctionnement lesdits au moins deux circuits partiels de circuit de freinage (A, B) sont séparés en utilisant l'élément de séparation.

10. Procédé selon l'une quelconque des revendications 6 à 9, dans lequel le deuxième état de fonctionnement est un état de fonctionnement ABS du système de freinage (2).

11. Système de freinage selon l'une quelconque des revendications 6 à 10, dans lequel le système de freinage (2) présente deux circuits partiels de circuit de freinage (A, B), dans lequel le premier circuit partiel de circuit de freinage (B) est associé à un essieu avant d'un véhicule et dans lequel le deuxième circuit partiel de circuit de freinage (A) est associé à un essieu arrière d'un véhicule.

12. Système de freinage selon l'une quelconque des revendications 6 à 11, dans lequel le point de travail de l'élément moteur (10) peut être déterminé comme le couple antagoniste M de l'élément moteur en utilisant la formule

$$M = M_{fric} + \frac{\pi}{4} * e * (p_1 * d_1^2 + p_2 * d_2^2)$$

et dans lequel deux éléments de pompe sont configurés comme éléments de pompe avec un diamètre d1>d2, en particulier d1=7,5 mm et d2=6 mm.

13. Véhicule présentant un système de freinage (2) selon au moins une des revendications 6 à 12.

**Fig. 1**

Fig. 2a

Fig. 2b

Fig. 3

**EP 2 941 372 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009046273 A1
- WO 2008017726 A1